# EUROPÄISCHE PATENTSCHRIFT

(11) **EP 2 218 525 B1**
(45) Veröffentlichungstag und Bekanntmachung des Hinweises auf die Patenterteilung: **17.12.2014**
(21) Anmeldenummer: 10001417.4
(22) Anmeldetag: 11.02.2010
(51) Int. Cl.: B21F 23/00, B23K 9/133, B23D 65/00

(54) **Drahtvorschubvorrichtung**
Wire feeder device
Dispositif d'avance de fil

(30) Priorität: 16.02.2009 DE 102009009180
(43) Veröffentlichungstag der Anmeldung: 18.08.2010
(73) Patentinhaber: VOLLMER WERKE Maschinenfabrik GmbH, 88400 Biberach/Riss (DE)
(72) Erfinder: Bailer, Peter, 88433 Schemmerhofen-Altheim (DE); Hutzel, Edgar, 88444 Ummendorf (DE); Mall, Fridolin, 89584 Ehingen (DE)
(74) Vertreter: Thum, Bernhard

(56) Entgegenhaltungen:
- EP-A2- 1 206 993
- AT-A1- 502 725
- DE-C1- 3 809 006
- DE-U1-202004 005 219
- GB-A- 209 181
- US-A- 4 873 419

## Beschreibung

Die vorliegende Erfindung betrifft eine Drahtvorschubvorrichtung zum Transportieren eines Schweißdrahts.

Derartige Drahtvorschubvorrichtungen treiben den Schweißdraht über Rollen an und transportieren den Schweißdraht kontinuierlich zu einem Schweißbrenner. Die den Schweißdraht antreibenden Rollen sind einander gegenüberliegend angeordnet und weisen einen Abstand zueinander auf, der dem Durchmesser des zu transportierenden Schweißdrahts entspricht. Um Schweißdrähte mit verschiedenen Durchmessern transportieren zu können, ist eine der Rollen federnd gelagert.

Herkömmlicherweise transportiert eine Drahtvorschubvorrichtung den Schweißdraht kontinuierlich zu einem Schweißbrenner, der den Schweißdraht während des Schweißens zum Schmelzen bringt, wobei das von dem Schweißdraht abgeschmolzene Volumen keine Rolle spielt.

Für bestimmte Anwendungen, bei denen ein Schweißdraht einem Schweißbrenner zugeführt werden muss, können derartige Drahtvorschubvorrichtung aufgrund ihrer unzureichenden Präzision bei der Zuführung des Schweißdrahts nicht genutzt werden. Insbesondere beim Stellitieren von Sägezähnen muss der Schweißdraht präzise zu einem vorbestimmten Abschmelzpunkt zugeführt werden, an dem nur ein vorbestimmtes Volumen von dem Schweißdraht abgeschmolzen wird. Die präzise Zuführung innerhalb einer Toleranz von 0,1 mm zu dem vorbestimmten Abschmelzpunkt und das Abschmelzen eines vorbestimmten Drahtabschnitts ist beim Stellitieren von Sägezähnen notwendig, da hier ein von zwei geschlossenen Formbacken gebildeter Hohlraum mit dem von dem Schweißdraht abgeschmolzenen Volumen - mit einer vordefinierten Füllmenge - gefüllt wird, um an dem Sägezahn eine dem abgeschmolzenen Volumen entsprechende Stellitschneide anformen zu können. Dementsprechend muss die Drahtvorschubvorrichtung dem Abschmelzpunkt unterhalb des Schweißbrenners einen Drahtabschnitt zuführen können, dessen Länge in Abhängigkeit von seinem Durchmesser exakt dem vordefinierten Volumen von Stellit zur Füllung des Hohlraums entspricht. Eine derart präzise Zuführung zu einem Abschmelzpunkt und eine derart präzise Positionierung eines Drahtes ist mit den herkömmlichen Drahtvorschubeinrichtungen schwer zu erreichen.

GB 209181, das dem Oberbegriff vom Anspruch 1 zugrundeliegt, offenbart eine Drahtvorschubvorrichtung zum Transportieren eines Schweißdrahtes mit einem Motor für das Hinaus- und Zurückfahren des Schweißdrahtes, einer von einem Motor angetriebenen Rollenanordnung, durch die der Schweißdraht hindurch geführt wird, wobei die Rollenanordnung ein Rollenpaar aufweist, mittels dem der Schweißdraht an einem vorbestimmten Abschmelzpunkt und an einer definierten Ausgangsposition positionierbar ist, und einer Vorspanneinrichtung, die zumindest eine der Rollen des Rollenpaares in Richtung der anderen Rolle vorspannt.

AT 502 725 A1 offenbart eine Drahtfördervorrichtung, bei der ein Schweißdraht durch einen runden Durchbruch in einer Spannvorrichtung zwischen die Antriebsrolle und die Druckrolle geführt wird. Die Antriebsrolle ist dabei in einem Gleitschuh angeordnet und wird von einem Motor angetrieben. Um den Schweißdraht mittels der Antriebsrolle fördern zu können, ist an der dem Schweißdraht gegenüberliegenden Seite der Antriebsrolle ein Druckhebel drehbar angeordnet. Der Druckhebel ist über eine Schwenkachse schwenkbar gelagert. Um den Druck bzw. die Anpresskraft auf den Schweißdraht aufzubauen und danach aufrechtzuerhalten, wird ein an der Spannvorrichtung schwenkbar gelagerter Spannbügel in Richtung eines Druckhebels geschwenkt der den Druckhebel fixiert. Um den Einfädelvorgang in die Drahtfördervorrichtung zu erleichtern, ist ein verstellbares Distanzelement angeordnet, durch das ein definierter Abstand und/oder eine definierte Anpresskraft zwischen der Antriebsrolle und der Druckrolle erreicht wird. Mit Hilfe des Distanzelements kann die Anpresskraft während des Einfädelvorgangs auf einen definierten Wert reduziert werden.

Daher ist es eine Aufgabe der vorliegenden Erfindung, eine Vorrichtung der eingangs bezeichneten Art bereitzustellen, die eine präzise Positionierung und eine präzise Zuführung von Schweißdrähten mit unterschiedlichen Durchmessern über die gesamte Länge des Schweißdrahts möglich macht.

Diese Aufgabe wird gelöst durch eine Vorrichtung der eingangs bezeichneten Art mit einer Rollenanordnung, durch die der Schweißdraht hindurchgeführt wird, wobei die Rollenanordnung zumindest ein Rollenpaar zum Positionieren des Schweißdrahtes in einer vorbestimmten Position aufweist, einer Vorspanneinrichtung, die zumindest eine der Rollen des Rollenpaars in Richtung der anderen Rolle vorspannt, und einer Anschlaganordnung, die einen vorbestimmten Sollabstand zwischen den Rollen des zumindest einen Rollenpaares festlegt, wobei die Anschlaganordnung der Vorspannung der zumindest einen vorgespannten Rolle entgegenwirkt.

Mit der erfindungsgemäßen Drahtvorschubvorrichtung kann der zu einem Abschmelzpunkt zuzuführende Schweißdraht in einer definierten Ausgangsposition positioniert und entsprechend dem abgeschmolzene Volumen ausgehend von der definierten Ausgangsposition zu dem Abschmelzpunkt bzw. Schweißbrenner zugeführt werden. Nach jedem Abschmelzvorgang muss der Schweißdraht wieder in die definierte Ausgangsposition zurückgefahren werden, um sicherzustellen, dass jeweils nur ein Drahtabschnitt zu dem Abschmelzpunkt zugeführt und abgeschmolzen wird, dessen Länge in Abhängigkeit von seinem Durchmesser dem Volumen zur Füllung eines Hohlraums in einer Formbackenanordnung entspricht.

Falls ein Drahtende über das Rollenpaar mit der vorgespannten Rollen hinaus gefördert wurde, kann der Draht beim Zurückfahren in die definierte Ausgangsposition an den sich durch ihre Vorspannung aneinander anlegenden Rollen blockiert und verformt werden und schlimmstenfalls die definierte Ausgangsposition nicht einhalten. Daher ist an der Drahtvorschubeinrichtung eine Anschlaganordnung vorgesehen, die einen vorbestimmten Sollabstand zwischen den gegenüberliegenden Rollen eines Rollenpaares festlegt. Die Anschlaganordnung wirkt der Vorspannung der vorgespannten Rolle entgegen und begrenzt dadurch die Auslenkung der vorgespannten Rolle in Richtung der anderen Rolle der Rollenanordnung. Dementsprechend kann der Schweißdraht selbst in dem Fall, in dem ein Drahtende bereits über die gegenüberliegenden Rollen hinaus in Richtung des Schweißbrenners gefördert wurde, in seine vorbestimmte Ausgangsposition zurückgefahren werden. Mit anderen Worten ermöglicht die Drahtvorschubvorrichtung einen präzise Zuführung zu einem vorbestimmten Abschmelzpunkt und die Nutzung von Schweißdrähten mit unterschiedlichen Durchmessern über die gesamte Länge des Schweißdrahtes. Durch die präzise Zuführung des Schweißdrahtes wird zudem sichergestellt, dass jeweils ein Drahtabschnitt zugeführt wird, der dem Füllvolumen des Hohlraums entspricht.

Da die Anschlaganordnung die Auslenkung der vorgespannten Rolle in Richtung der anderen Rolle begrenzt und somit einen Sollabstand zwischen den beiden Rollen der Rollenanordnung festlegt, sieht eine bevorzugte Ausführungsform der Erfindung vor, dass sich zumindest eine Rolle der Rollenanordnung an der Anschlaganordnung abstützt.

Um die Drahtvorschubvorrichtung an verschiedene Durchmesser von zu transportierenden Schweißdrähten anpassen zu können, ist erfindungsgemäß der von der Anschlaganordnung festgelegte Sollabstand zwischen den Rollen des zumindest einen Rollenpaares auf verschiedene Drahtdurchmesser einstellbar.

Die Einstellbarkeit der Drahtvorschubvorrichtung bzw. der Anschlaganordnung auf verschiedene Drahtdurchmesser kann gemäß einer Weiterbildung der Erfindung dadurch erreicht werden, dass die Anschlaganordnung eine Stellschraube aufweist, durch die der Sollabstand auf verschiedene Drahtdurchmesser einstellbar ist.

Gemäß einer alternativen Ausführungsform ist die Anschlaganordnung ein auswechselbarer Einzelanschlag, der einen vorbestimmten Sollabstand repräsentiert.

Ferner besteht erfindungsgemäß die Möglichkeit, die Anschlaganordnung in Form einer Scheibe mit sich stetig ändernden Radien auszubilden, wobei jeder Radius einen anderen Sollabstand darstellt.

Gemäß einer bevorzugten Ausführungsform ist die Anschlaganordnung eine Scheibe mit Segmenten, wobei jedes Segment mit einem unterschiedlichen Radius ausgebildet ist und jeder Radius einen anderen Sollabstand darstellt. Dabei kann der gewünschte Sollabstand zwischen den Rollen durch Verdrehen der Anschlaganordnung eingestellt werden. Mit anderen Worten wird hier die Scheibe verdreht und die Segmente der Scheibe in eine andere Position verlagert, wodurch sich die vorgespannte Rolle an ein anderes, mit einem anderen Radius ausgebildetes Segment anlegt und somit einen anderen Sollabstand zwischen den beiden Rollen einstellt.

Um Erkennen zu können, welches Segment welchen Radius bzw. Sollabstand darstellt, sieht eine Weiterbildung der Erfindung vor, dass an der Anschlaganordnung eine Skalierung vorgesehen ist, die den jeweiligen eingestellten Sollabstand zwischen den Rollen anzeigt.

Damit die in Richtung der anderen Rolle vorgespannte Rolle einen möglichst gleichmäßigen Anpressdruck auf den zu transportierenden Draht ausübt, ist die Vorspanneinrichtung gemäß einer bevorzugten Ausführungsform ein federnd gelagertes Ausgleichselement, an dem zumindest eine Rolle eines Rollenpaares angeordnet ist, wobei die Vorspanneinrichtung die daran angeordnete Rolle in Richtung der anderen Rolle des Rollenpaares vorspannt. In diesem Zusammenhang ist zu erwähnen, dass eine Vorspannkraft der Vorspanneinrichtung einstellbar ist. Mit anderen Worten kann es je nach Drahtdurchmesser notwendig sein, den Anpressdruck zu erhöhen oder zu senken, da der Schweißdraht über eine Reibungswirkung zwischen dem Schweißdraht und den Rollen angetrieben wird, wobei der Anpressdruck die Reibungswirkung unterstützt.

Um den Schweißdraht antreiben und präzise positionieren zu können, weist die Rollenanordnung gemäß einer Weiterbildung der Erfindung zumindest zwei Rollenpaare auf, durch die der Schweißdraht hindurch führbar ist.

Zur Übertragung eines von einem Antrieb erzeugten Drehmoments auf die Rollen eines Rollenpaares, sind gemäß einer bevorzugten Ausführungsform der Erfindung die Rollenpaare antriebsmäßig untereinander gekoppelt. Die antriebsmäßige Kopplung zwischen den Rollen muss jedoch nicht zwingend vorgesehen sein, da mehrere Rollen auch direkt von dem Antrieb angetrieben werden können.

Um den Schweißdraht auch mit toleranzbedingten Schwankungen in Form und Durchmesser sowie mit einer lieferungsbedingten Verformung präzise zu einem vorbestimmten Abschmelzpunkt zuführen zu können, ist gemäß einer bevorzugten Ausführungsform der Erfindung an der Drahtvorschubvorrichtung eine Richtrollenanordnung vorgesehen, die den Schweißdraht vorbestimmt deformiert, bevor dieser mit der Deformation die Drahtvorschubvorrichtung durchläuft.

Ferner ist erfindungsgemäß an der Drahtvorschubvorrichtung eine Schweißdrahtzuführhülse angeordnet. Die Drahtvorschubvorrichtung transportiert gemäß einer Weiterbildung der Erfindung den Schweißdraht mit der vorbestimmten Deformation durch die Schweißdrahtzuführhülse zu einer Formbackenanordnung. Mit anderen Worten legt sich der Schweißdraht mit seiner Deformation an die Schweißdrahtzuführhülse an, die eine Art Führung für den Schweißdraht bildet. Dadurch kann der Schweißdraht innerhalb einer Toleranz von 0,1 mm zu einem vorbestimmten Abschmelzpunkt zugeführt werden. An dem vorbestimmten Abschmelzpunkt wird der Schweißdraht dann durch einen Schweißbrenner abgeschmolzen. Das geschmolzene Material dringt schwerkraftbedingt in einen Hohlraum in einer Formbackenanordnung ein, die im geschlossenen Zustand den zu stellitierenden Sägezahn umschließt und den Hohlraum an diesem Sägezahn bildet. In dem Hohlraum verbindet sich das Stellit mit dem Sägezahn, wodurch der Sägezahn mit einer Stellitschneide versehen wird.

Die Erfindung betrifft ferner eine Vorrichtung zum Stellitieren von Sägezähnen mit einer Drahtvorschubvorrichtung der voranstehend beschriebenen Art.

Ferner betrifft die Erfindung eine Maschine zum Bearbeiten von Sägeblättern mit einer Vorrichtung der voranstehend beschriebenen Art.

Die Erfindung wird im folgenden beispielhaft anhand der beiliegenden Figuren erläutert. Es stellen dar:
- Figur 1: eine perspektivische Ansicht der Stellitiervorrichtung gemäß der Erfindung;
- Figur 2: eine perspektivische, vergrößerte Ansicht des Ausschnitts I aus Figur 1;
- Figur 3: eine vergrößerte Schnittansicht des Ausschnitts I aus Figur 1;
- Figur 4: eine Vorderansicht der Stellitiervorrichtung gemäß der Erfindung;
- Figur 5: eine Draufsicht der Stellitiervorrichtung gemäß der Erfindung;
- Figur 6: eine Ansicht des vergrößerten Ausschnitts Va aus Figur 5;
- Figur 7: eine Ansicht des vergrößerten Ausschnitts Vb aus Figur 5;
- Figur 8: eine perspektivische Ansicht einer Maschine zum Bearbeiten von Sägezähnen mit einer Stellitiervorrichtung gemäß der Erfindung während des Stellitierens;
- Figur 9: eine perspektivische Ansicht einer Maschine zum Bearbeiten von Sägezähnen mit einer Stellitiervorrichtung gemäß der Erfindung während des Anlassens; und
- Figur 10: eine Vorderansicht einer Maschine zum Bearbeiten von Sägezähnen.

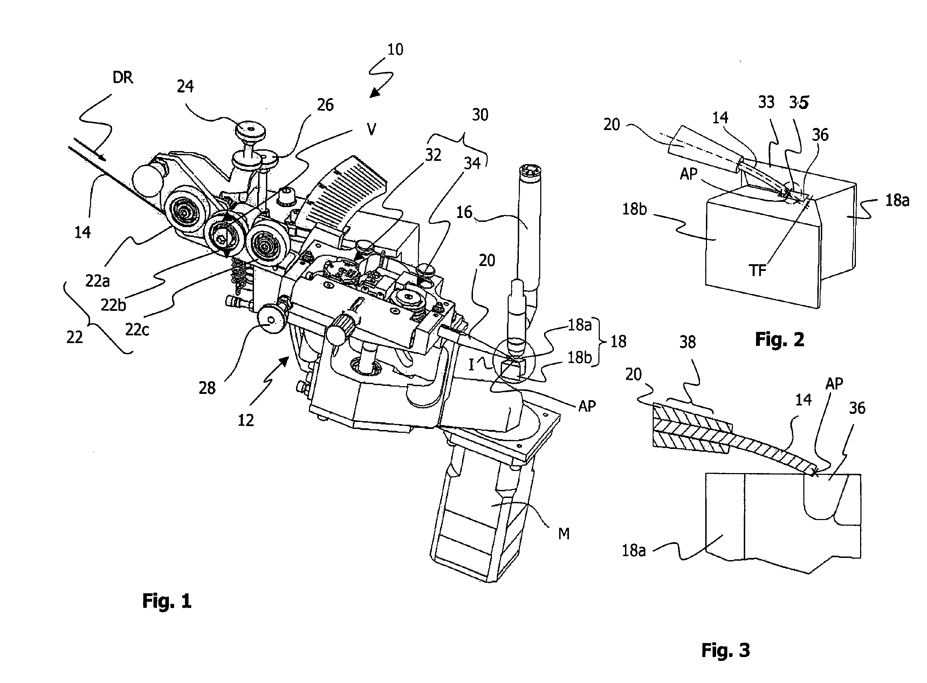

Figur 1 zeigt eine perspektivische Ansicht einer Vorrichtung zum Stellitieren von Sägezähnen, die allgemein mit 10 bezeichnet ist. Die Stellitiervorrichtung 10 umfasst eine Drahtvorschubvorrichtung 12 zum Zuführen des Schweißdrahts 14 zu einem Schweißbrenner 16. Der Schweißbrenner 16 ist oberhalb einer Formbackenanordnung 18 angeordnet, die zwei Formbacken 18a und 18b aufweist. Auf die Formbackenanordnung 18 wird im weiteren Verlauf dieser Beschreibung mit Bezug auf Figur 2 und 3 detailliert eingegangen. Der Schweißbrenner 16 bringt den Stellitdraht bzw. Schweißdraht 14 zum Schmelzen und das geschmolzene Stellit dringt anschließend schwerkraftbedingt in einen hier nicht gezeigten Hohlraum in der Formbackenanordnung 18 ein.

Man erkennt ferner in Figur 1, dass an einer Drahtvorschubvorrichtung 12 eine Schweißdrahtzuführhülse 20 vorgesehen ist, die den Schweißdraht 14 zu einem vorbestimmten Abschmelzpunkt AP zuführt.

Entgegen der Drahtzuführrichtung DR, in der der Schweißdraht 14 dem Schweißbrenner 16 zugeführt wird, ist der Drahtvorschubvorrichtung 12 eine Richtrollenanordnung 22 vorgeschaltet. Die Richtrollenanordnung 22 weist drei Richtrollen 22a, 22b, 22c auf, um die der Schweißdraht 14 herum geführt ist. Die mittlere Richtrolle 22b der Richtrollenanordnung 22 ist in vertikaler Richtung verlagerbar, wie durch den Doppelpfeil V angedeutet, wodurch die Deformation des Schweißdrahts 14 beeinflusst werden kann. Mit anderen Worten wird der Schweißdraht 14 durch die Itichtrollenanordnung 22 und hier insbesondere durch die Richtrolle 22b vorbestimmt deformiert und anschließend der Drahtvorschubvorrichtung 12 zugeleitet. Die Richtrolle 22b kann durch die Stellschraube 24 vertikal verlagert werden, wodurch der Deformationsgrad des Schweißdrahts beeinflusst oder die Richtrollenanordnung 22 auf unterschiedliche Durchmesser des Schweißdrahts 14 eingestellt werden kann.

In Figur 1 erkennt man ferner Stellschrauben 26 und 28, durch die die Stellitiervorrichtung 10 vertikal und horizontal verlagert werden kann. Zur Bearbeitung unterschiedlicher Sägeblätter, wie z.B. Kreissägeblätter, Gattersägeblätter und Bandsägeblätter, kann es notwendig sein, die Stellitiervorrichtung 10 relativ zu einem vorbestimmten Abschmelzpunkt zu verlagern. Mit der Stellschraube 28 ist es möglich, die Position der Drahtvorschubvorrichtung 12 derart einzustellen, dass die Drahtvorschubvorrichtung 12 immer auf einen Flächenmittelpunkt einer der Schweißdrahtzuführhülse 20 zugewandten Fläche 33 der Formbackenanordnung gerichtet ist (Fig. 2), der bevorzugt mit einem vorbestimmten Abschmelzpunkt übereinstimmt.

Die hier gezeigten Stellschrauben 24, 26, 28 zum Verlagern der Richtrolle 22b bzw. zum Verlagern der Stellitiervorrichtung 10 können selbstverständlich durch Motoren ersetzt werden, die beispielsweise durch eine CNC-Steuerung angesteuert werden können. Die Erfindung ist daher nicht auf die Nutzung von Stellschrauben zur Verlagerung der verschiedenen Komponenten beschränkt.

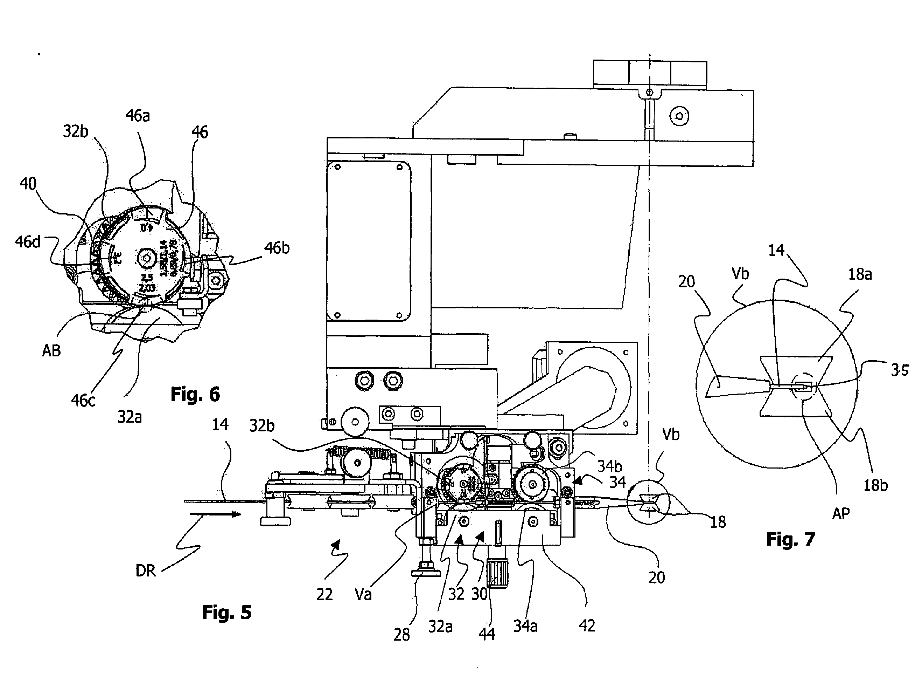

Um dem Schweißbrenner 16 bzw. dem vorbestimmten Abschmelzpunkt zugeführt zu werden, wird der Schweißdraht 14 durch die Drahtvorschubvorrichtung 12 angetrieben. Die Drahtvorschubvorrichtung 12 sieht dazu eine Rollenanordnung 30 vor, die von zwei Rollenpaaren 32 und 34 gebildet wird. Die Rollen eines Rollenpaares 32 und 34 sind antriebsmäßig miteinander gekoppelt und werden durch einem Motor M beispielsweise über ein Getriebe angetrieben. Der Schweißdraht 14 wird durch Rollenpaare 32 und 34 hindurchgeführt und angetrieben. In Figur 1 ist jeweils nur eine Rolle der Rollenpaare 32 und 34 vollständig gezeigt. Auf die Drahtvorschubvorrichtung 12 wird jedoch mit Bezug auf Figur 5 detailliert eingegangen.

Wie bereits mehrfach erwähnt, wird der Schweißdraht 14 durch die Richtrollenanordnung 22 vorbestimmt deformiert und mit dieser vorbestimmten Deformation mittels der Schweißdrahtzuführhülse 20 einem vorbestimmten Abschmelzpunkt AP (Fig. 2) zugeführt.

Figur 2 zeigt eine vergrößerte perspektivische Darstellung des Ausschnitts I aus Figur 1. Man erkennt die Formbackenanordnung 18 mit zwei Formbacken 18a und 18b. Im geschlossenen Zustand bildet die Formbackenanordnung 18 an einer der Schweißdrahtzuführhülse 20 zugewandten Fläche 33 eine Öffnung 35, die in einen in Figur 2 angedeuteten Hohlraum 36 in der Formbackenanordnung 18 mündet.

In Figur 2 erkennt man zudem die Schweißdrahtzuführhülse 20, die den Schweißdraht 14 mit der vorbestimmten Deformation, hier einer Krümmung, zu dem in Figur 2 durch einen Kreis angedeuteten Abschmelzpunkt AP führt. Durch die Deformation des Schweißdrahts 14 werden toleranzbedingte Schwankungen der Form und des Durchmessers des Drahtes sowie lieferbedingte Verformungen ausgeglichen und somit sichergestellt, dass der Schweißdraht 14 bei mehreren aufeinander folgenden Stellitiervorgängen innerhalb der Toleranz den vorbestimmten Abschmelzpunkt AP trifft. In Figur 2 ist zudem schematisch dargestellt mit welch hoher Präzision, nämlich innerhalb eines Toleranzfeldes TF von 0,1 mm, der Schweißdraht 14 den Abschmelzpunkt AP treffen muss. Diese Präzision ist notwendig, um das durch den Schweißbrenner 16 geschmolzene Stellit exakt portioniert, d.h. ein vorbestimmtes Volumen, gleichmäßig und lunkerfrei in dem in der Formbackenanordnung 18 gebildeten Hohlraum 36 durch die Schwerkraft "eintropfen" zu lassen.

Figur 3 zeigt eine vergrößerte Schnittansicht des Ausschnitts I aus Figur 1. Man erkennt wiederum die Schweißdrahtzuführhülse 20, die den Schweißdraht 14 mit einer vorbestimmten Deformation zu der Formbackenanordnung 18 (hier nur der Formbacken 18a gezeigt) zuführt. Aus Figur 3 erkennt man, dass es sich bei der Deformation des Schweißdrahts 14 bevorzugt um eine Krümmung "nach unten" handelt. Mit dieser Krümmung legt sich der Schweißdraht 14 in einem Anlagebereich 38 an die Schweißdrahtzuführhülse 20 an. Durch die Anlage an der Schweißdrahtzuführhülse 20 wird der Schweißdraht 14 definiert an der Hülse 20 abgelenkt und dem vorbestimmten Abschmelzpunkt AP zugeführt. Mit anderen Worten bildet der Anlagebereich 38 in der Schweißdrahtzuführhülse 20 eine Art "Führung" für den Schweißdraht 14, die eine Ansteuerung des vorbestimmten Abschmelzpunkts AP mit einer reproduzierbar hohen Präzision ermöglicht. In Figur 3 erkennt man ferner, einen Ausschnitt des Hohlraums 36 in der Formbacke 18a. Die Formbackenanordnung 18 umschließt im geschlossenen Zustand den zu stellitierenden Sägezahn und bildet den Hohlraum 36, in den das geschmolzene Stellit eindringen und sich mit dem Sägezahn verbinden kann.

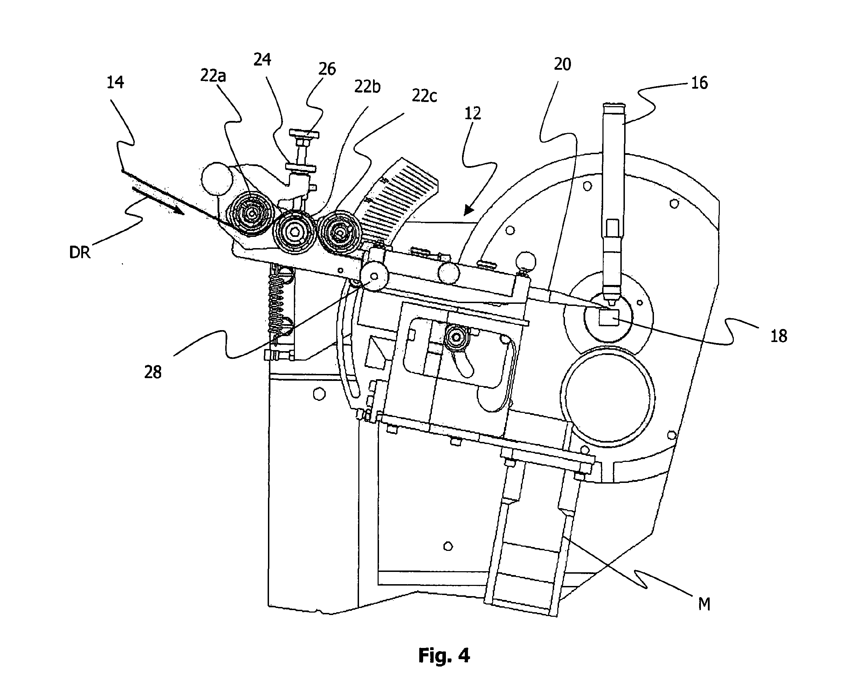

Figur 4 zeigt eine Vorderansicht der Stellitiervorrichtung 10. Aus Figur 4 erkennt man deutlich wie der Schweißdraht 14 durch die Richtrollenanordnung 22 umgelenkt und deformiert wird. Nach der Deformation durch die Richtrollen 22a, 22b, 22c der Richtrollenanordnung 22 wird der durch die Drahtvorschubvorrichtung 12 angetriebene Schweißdraht 14 mittels der Schweißdrahtzuführhülse 20 einem vorbestimmten Abschmelzpunkt AP zugeführt, an dem ein vorbestimmtes Volumen durch den Schweißbrenner 16 von ihm abgeschmolzen wird. Das abgeschmolzene Stellit dringt in die Formbackenanordnung 18 ein und verbindet sich dort mit dem von der Formbackenanordnung 18 umschlossenen Sägezahn eines Sägeblatts.

Figur 5 zeigt eine Draufsicht der Stellitiervorrichtung 10. Aus Figur 5 wird wiederum ersichtlich, wie der Schweißdraht 14 von einer hier nicht gezeigten Bevorratungsrolle in der Drahtzuführrichtung DR der Richtrollenanordnung 22 zugeführt wird und durch diese vorbestimmt deformiert wird. Nach der Richtrollenanordnung 22 folgt die den Schweißdraht 14 antreibende Drahtvorschubvorrichtung 12. Die Drahtvorschubvorrichtung 12 weist, wie bereits erwähnt, eine Rollenanordnung 30 mit zwei Rollenpaaren 32 und 34 auf. Die Rollen 32a, 32b und 34a, 34b der Rollenpaare 32, 34 sind antriebsmäßig über Zahnradscheiben 40 (in Fig. 6 ersichtlich) miteinander gekoppelt. Die Rollen 32a und 34a sind an einem Ausgleichelement 42 angeordnet, das federnd gelagert ist und die Rollen 32a, 34a in Richtung der Rollen 32b, 34b vorspannt. Die Vorspannkraft, mit der das Ausgleichelement 42 die Rollen 32a, 34a gegen die Rollen 32b, 34b vorspannt, kann über eine Stellschraube 44 eingestellt und somit an verschiedene Durchmesser von Stellitdrähten 14 angepasst werden. Da die Rollen 32a, 32b, 34a, 34b der Rollenpaare 32, 34 den Stellitdraht 14 durch eine Reibwirkung zwischen Rollen 32a, 32b, 34a, 34b und Schweißdraht 14 transportieren bzw. antreiben, kann es notwendig sein, den Anpressdruck bzw. die Vorspannkraft je nach Durchmesser des Schweißdrahtes 14 durch die Stellschraube 44 an dem Ausgleichelement 42 zu erhöhen oder zu senken. An der Rolle 32b ist eine Anschlaganordnung 46 vorgesehen, auf die mit Bezug auf Figur 6 näher eingegangen wird. Die Rolle 32a stützt sich an der Anschlaganordnung 46 ab, wodurch verhindert wird, dass sich die Rollen 32a und 32b aneinander anlegen und der Draht 14 nicht mehr durch diese hindurch bewegt werden kann.

Figur 6 zeigt eine vergrößerte Ansicht des Ausschnitts Va aus Figur 5. In Figur 6 erkennt man die Anschlaganordnung 46, die auf der Rolle 32b angeordnet ist. Ferner ist in Figur 6 deutlich ersichtlich, dass unterhalb der Rolle 32b eine Zahnradscheibe 40 vorgesehen ist, durch die die beiden Rollen 32a und 32b antriebsmäßig gekoppelt sind und an dem Schweißdraht 14 zum Vorschub angreifen. Mit anderen Worten wird eine der Rollen 32a, 32b, 34a, 34b direkt von dem Motor M angetrieben und die angetriebene Rolle 32a, 32b, 34a, 34b übertragt das von dem Motor M erzeugte Drehmoment über die Zahnradscheibe 40 auf die jeweils andere Rolle 32a, 32b, 34a, 34b eines Rollenpaares 32, 34. Die antriebsmäßige Kopplung zwischen den Rollen 32a, 32b, 34a, 34b muss jedoch nicht gegeben sein, da auch ein direkter Antrieb der Rollen 32a, 32b, 34a, 34b durch den Motor M denkbar ist.

Aus Figur 6 wird zudem deutlich, wie sich die Rolle 32a an der Abstützstelle AB an der Anschlaganordnung 46 abstützt. Da beim Stellitieren von Sägezähnen ein exakt definiertes Materialvolumen in den von den Formbacken 18a und 18b gebildeten Hohlraum 36 eingefüllt werden soll, wird der Schweißdraht 14 nach dem Abschmelzen immer in eine vorher definierte Ausgangsposition zurückgefahren. Ist ein Drahtende des Schweißdrahtes 14 bereits über das Rollenpaar 32 mit den Rollen 32a, 32b hinaus nach vorne in Richtung der Schweißdrahtzuführhülse 20 gefördert worden, würde sich die Rolle 32a ohne Anschlaganordnung 46 aufgrund der Vorspannung durch das Ausgleichelement 42 an die Rolle 32b anlegen. Der Draht 14 könnte nicht in seine vordefinierte Ausgangsposition zurückgefahren werden. Der Schweißdraht 14 könnte an den aneinander anliegenden Rollen 32a und 32b blockiert und verformt werden und schlimmstenfalls von der definierten Ausgangsposition abweichen. Da der Draht 14 dann nicht in die vorbestimmte Ausgangsposition zurückgefahren werden kann, könnte es sogar zu Schäden an dem zu bearbeitenden Sägeblatt kommen, d.h. es würde Ausschuss produziert.

Die definierte Ausgangsposition für das Zuführen des Schweißdrahtes 14 wird benötigt, um den Schweißdraht 14 entsprechend dem abgeschmolzenen Volumen nachführen bzw. dem vorbestimmten Abschmelzpunkt AP zuführen zu können. Mit anderen Worten wird der Schweißdraht 14 nach jedem Abschmelzvorgang in die definierte Ausgangsposition zurückgefahren, um präzise einen Schweißdrahtabschnitt 14 zu dem Abschmelzpunkt zuzuführen, dessen Länge in Abhängigkeit von seinem Durchmesser dem vorbestimmen Volumen entspricht, das zur Füllung des Hohlraums 36 benötigt wird. Dadurch wird verhindert, dass einzelne Sägezähne mit zuviel oder zuwenig Stellit bzw. einer zu großen oder zu kleinen Stellitschneide versehen werden und somit unbrauchbare Sägeblätter als Ausschuss produziert werden.

Durch die Anschlaganordnung 46 wird eine unerwünschte Deformation des Schweißdrahtes 14 verhindert, da die Anschlaganordnung 46 einen vorbestimmten Sollabstand zwischen den Rollen 32a und 32b des Rollenpaars 32 festlegt. Mit anderen Worten begrenzt die Anschlaganordnung 46 die Auslenkung der Rolle 32a in Richtung der Rolle 32b aufgrund der Vorspannung durch das Ausgleichelements 42. Die Anschlaganordnung 46 wirkt der Vorspannung der Rolle 32a entgegen und begrenzt dadurch die Auslenkung der vorgespannten Rolle 32a in Richtung der anderen Rolle 32b des Rollenpaares 32. Dementsprechend kann der Schweißdraht 14 selbst in dem Fall, in dem ein Drahtende bereits über die gegenüberliegenden Rollen 32a, 32b hinaus in Richtung des Schweißbrenners 16 gefahren wurde, in seine definierte Ausgangsposition zurückgefahren werden. Mit anderen Worten ermöglicht die Drahtvorschubvorrichtung 12 die Nutzung von Schweißdrähten 14 mit unterschiedlichen Durchmessern über die gesamte Länge des Schweißdrahtes 14 und verhindert, dass Ausschuss produziert wird.

Figur 6 zeigt ferner, dass es sich bei der Anschlaganordnung 46 um eine Scheibe mit verschiedenen Segmenten 46a, 46b, 46c, 46d handelt, die jeweils einen bestimmten Radius repräsentieren, der mit dem gewünschten Sollabstand zwischen den Rollen 32a und 32b übereinstimmt. Der Sollabstand zwischen den Rollen 32a und 32b kann durch Verdrehen der Scheibe 46 auf bestimmte Drahtdurchmesser des Schweißdrahts 14 eingestellt werden. Mit anderen Worten werden die Segmente 46a, 46b, 46c, 46d der Scheibe 46 in eine andere Position verlagert, wodurch sich die Rolle 32a an ein anderes, mit einem anderen Radius ausgebildeten Segment 46 anlegt und somit einen anderen Sollabstand bzw. Drahtdurchmesser zwischen den Rollen 32a und 32b einstellt. Die Anschlaganordnung 46 stellt durch den vorbestimmten Sollabstand zwischen den Rollen 32a und 32b sicher, dass der Draht 14 immer in seine definierte Ausgangsposition zurückgefahren werden kann, unabhängig davon, ob ein Drahtende bereits über die Rollen 32a und 32b hinaus gefördert wurde. Ferner verhindert die Anschlaganordnung 46 Schäden an dem zu bearbeitenden Sägeblatt und somit teueren Ausschuss.

Die Anschlaganordnung 46 ist jedoch nicht auf diese Scheibenform mit Segmenten beschränkt, die verschiedene Radien repräsentieren. Es sind auch auswechselbare Einzelanschläge, eine Scheibe mit sich stetig ändernden Radien oder eine Stellschraube zum Einstellen der gewünschten Sollabstände denkbar.

Figur 6 zeigt zudem, dass an der Anschlaganordnung 46, d.h. der Scheibe 46, eine Skalierung angebracht ist, die jeweils den Drahtdurchmesser angibt, der mit einem der Segmente 46a, 46b, 46c, 46d eingestellt werden kann. Mit anderen Worten beschreibt die Skalierung den Sollabstand, der durch das jeweilige Segment 46a, 46b, 46c, 46d zwischen den Rollen 32a und 32b eingestellt wird.

Figur 7 zeigt eine vergrößerte Ansicht des Ausschnitts Vb. In dieser Draufsicht erkennt man wiederum wie der Schweißdraht 14 durch die Schweißdrahtzuführhülse 20 zu der Formbackenanordnung 18 mit den Formbacken 18a und 18b zugeführt wird. In Figur 7 ist ein Bereich um den vorbestimmten Abschmelzpunkt AP schematisch dargestellt, der auf der Fläche 33 oberhalb der Öffnung 35 liegt. Diesen Abschmelzpunkt AP gewährleistet, dass das geschmolzene Stellit durch die Schwerkraft in die Öffnung 35 des von den Formbacken 18a und 18b gebildeten Hohlraum 36 eindringen kann und sich dort mit dem hier nicht gezeigten Sägezahn verbindet. Bevorzugt ist hierbei, dass der vorbestimmte Abschmelzpunkt AP mit dem Flächenmittelpunkt der der Schweißdrahtzuführhülse 20 zugewandten Fläche 33 der Formbackenanordnung 18 übereinstimmt.

Im Folgenden soll mit Bezug auf die Figuren 1 bis 7 ein Verfahren zum Stellitieren von Sägezähnen beschrieben werden. Bei einem Stellitiervorgang muss der Schweißdraht mit einer hohen Präzision - innerhalb eines Toleranzfeldes TF von 0,1 mm - einem vorbestimmten Abschmelzpunkt AP zugeführt werden. Das Einhalten dieses engen Toleranzfelds TF wird durch herstellungsbedingte Toleranzen, die die Form und den Durchmesser des Schweißdrahts 14 betreffen, sowie durch von einem Abwickelvorgang einer Bevorratungsrolle herrührenden Verformungen erschwert. Dementsprechend wird der Schweißdraht 14 durch die Richtrollenanordnung 22 mit einer vorbestimmten Deformation, insbesondere einer Krümmung, versehen und durchläuft mit dieser vorbestimmten Deformation die den Schweißdraht 14 antreibende Drahtvorschubvorrichtung 12.

Die Drahtvorschubvorrichtung 12 führt den Schweißdraht 14 jeweils entsprechend dem vorbestimmten Füllvolumen des Hohlraums 36 in der Formbackenanordnung 18 zu dem Abschmelzpunkt AP bzw. dem Schweißbrenner 16 zu. Mit anderen Worten wird ein Abschnitt des Schweißdrahtes 14 zu dem Schweißbrenner zugeführt, dessen Schmelze dem Füllvolumen des Hohlraums 36 entspricht. Hierzu ist es notwenig, den Schweißdraht 14 vor jedem neuen Abschmelzvorgang zurück in seine definierte Ausgangsposition zu fahren und erneut dem Abschmelzpunkt AP zuzuführen, um sicherzustellen, dass jeweils nur der dem Füllvolumen entsprechende Drahtabschnitt abgeschmolzen wird. Mit der Anschlaganordnung 46, die einen Sollabstand zwischen den Rollen 32a und 32b einstellt, kann der Schweißdraht 14 über seine gesamte Länge in die definierte Ausgangsposition zurückgefahren werden.

Nach der Drahtvorschubvorrichtung 12 wird der Schweißdraht 14 mit der vorbestimmten Deformation mittels der Schweißdrahtzuführhülse 20 zu dem vorbestimmten Abschmelzpunkt AP zugeführt. Durch die vorbestimmte Deformation legt sich der Schweißdraht 14 in einem Anlagebereich 38 an die Schweißdrahtzuführhülse 20 an. Der Anlagebereich 38 bildet hier eine Führung für den Schweißdraht 14, wodurch dieser exakt zu dem vorbestimmten Abschmelzpunkt AP geführt wird. Diese Anlage an dem Anlagebereich 38 ermöglicht auch die reproduzierbar hohe Präzision der Zuführung zum Abschmelzpunkt AP, da der Schweißdraht 14 an dem Anlagebereich 38 der Schweißdrahtzuführhülse 20 in Richtung des Abschmelzpunktes AP abgelenkt wird und diesen innerhalb der engen Toleranz ansteuert. Erreicht der Schweißdraht 14 den Abschmelzpunkt AP, wird durch den Schweißbrenner 16 ein vorbestimmtes Volumen abgeschmolzen. Die Stellitschmelze dringt, bedingt durch die Schwerkraft, durch die Öffnung 35 in den von der Formbackenanordnung 18a und 18b gebildeten Hohlraum 36 ein, der einer Negativform des zu stellitierenden Sägezahns entspricht. In diesem Hohlraum 36 verbindet sich das geschmolzene Stellit mit dem zu stellitierenden Sägezahn. Anschließend wird die Formbackenanordnung 18 geöffnet und der Stellitiervorgang ist abgeschlossen.

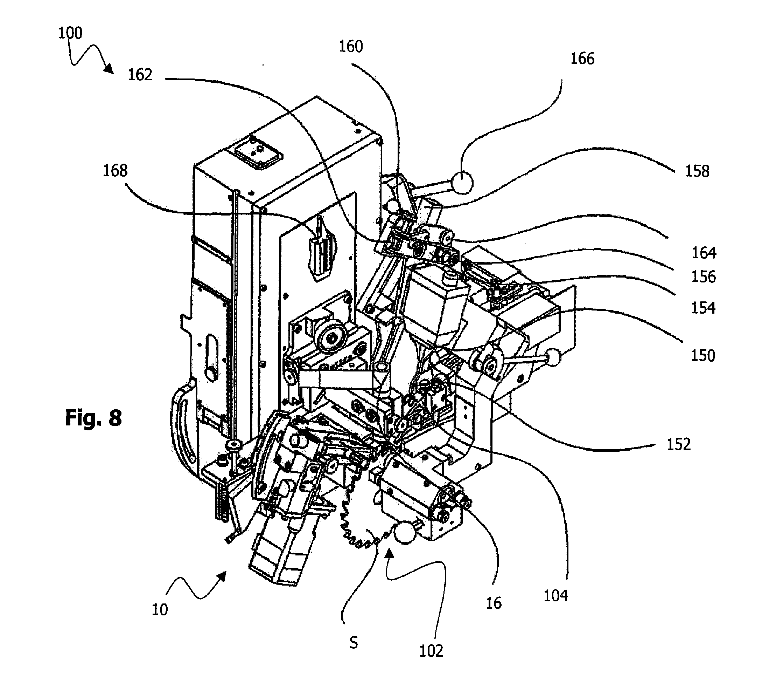

Figur 8 zeigt eine Maschine 100 zum Bearbeiten von Sägezähnen, insbesondere dem Stellitieren und Anlassen von Sägezähnen von verschiedenartigen Sägeblättern. An der Maschine 100 ist eine Stellitiervorrichtung 10 der voranstehend beschriebenen Art angeordnet. Neben der Stellitiervorrichtung 10 weist die Maschine 100 auch eine Vorrichtung 150 zum Anlassen der stellitierten Sägezähne auf. Das Anlassen stellitierter Sägezähne wird notwendig, da durch das Stellitieren hohe Temperaturen auf das Material des Sägeblattes einwirken. Durch diese hohen Temperaturen bzw. durch das Abkühlen des Sägezahns nach dem Stellitieren können Verspannungen und Änderungen des Materialgefüges in das Material des Sägeblatts S eingebracht werden, die einen Verzug in dem Sägeblatt S und/oder einen Bruch eines Sägezahns des Sägeblattes S hervorrufen können und dessen Funktion beeinträchtigen können.

Das Anlassen erfolgt mit einer Hochfrequenz-Anlasseinrichtung 150, wobei das erneute Zuführen von Wärme zu dem Sägezahn bzw. Sägeblatt S zu einer Gefügeveränderung in dem Material des Sägeblatts S führt, wodurch Verspannungen in dem Material abgebaut werden. Mit anderen Worten wird durch das Anlassen mit der Hochfrequenz-Anlasseinrichtung 150 eine Rekristallisation in dem Gefüge des Sägeblattes herbeigeführt.

Wie bereits erwähnt, können mit der Maschine 100 wechselweise zwei verschiedene Bearbeitungsvorgänge durchgeführt werden, nämlich das Stellitieren und das Anlassen. Das zu bearbeitende Sägeblatt S wird mit einer Aufspanneinrichtung 102 in der Maschine 100 angebracht. Um jeden einzelnen Sägezahn jeweils in die Bearbeitungsposition bringen zu können, weist die Maschine 100 zudem eine CNCgesteuerte Vorschubeinrichtung 104 auf. Mit der Vorschubeinrichtung 104 kann jeweils ein vorbestimmter Sägezahn in die Bearbeitungsposition überführt werden. In bestimmten Anwendungsfällen kann es aus prozesstechnischen Gründen notwendig sein, bei Sägeblättern S mit verschiedenen Materialeigenschaften, die gerade stellitierten Sägezähne in einem oder mehreren weiteren Bearbeitungsdurchläufen anzulassen, wobei das Sägeblatt S in der gleichen Aufspanneinrichtung 102 verbleibt. Das Stellitieren und Anlassen erfolgt mit der gleichen Vorschubeinrichtung 104, wobei die Bearbeitungsreihenfolge der Sägezähne voreingestellt werden kann.

Zur Durchführung des Anlassens weist die Anlasseinrichtung 150 eine austauschbare Induktionsschlaufe 152 auf, die je nach Form und Größe des Sägezahns ausgetauscht werden kann. Die Anlasseinrichtung 150 ist an einer Hebelanordnung 154 angeordnet. Die Hebelanordnung 154 ist um einen Drehpunkt 156 verlagerbar. Durch Verlagern der Hebelanordnung 154 um den Drehpunkt 156 und Führen durch eine hier nicht gezeigte Kurvennut kann die Anlasseinrichtung 150 eine geradlinige Bewegung in Richtung des zu bearbeitenden Sägezahns ausführen. Die Anlasseinrichtung 150 bzw. die Hebelanordnung 154 wird über einen steuerbaren Antrieb 158 in Richtung des zu bearbeitenden Sägezahns oder von diesem weg bewegt. Anstelle der Hebelanordnung 154 ist beispielsweise auch eine Stellschlittenanordnung denkbar. Die Erfindung ist daher nicht auf eine Hebelanordnung 154 beschränkt.

Die Induktionsschlaufe 152 kann über verschiedene Justiereinrichtungen bzw. Stellschrauben auf das zu bearbeitende Sägeblatt S eingestellt werden. Die Anlasseinrichtung 150 kann über die Stellschraube 160 in vertikaler Richtung und über die Stellschraube 162 in horizontaler Richtung zu dem zu bearbeitenden Sägezahn verlagert und so auf das jeweilige Sägeblatt S eingestellt werden. Ferner ist eine Einstellung der Lage der Induktionsschleife 152 quer zu einer Einspannebene des Sägeblattes durch die Stellschraube 164 möglich. Mit anderen Worten kann die Lage der Induktionsschlaufe 152 derart verändert werden, dass der zu bearbeitende Sägezahn in der Mitte zwischen den beiden Schlaufenabschnitten der Induktionsschlaufe 152 liegt. Durch die Stellschrauben 160, 162, 164 ist eine Verlagerung der Induktionsschlaufe 152 in drei Richtungen zu dem Sägeblatt S möglich. Als Alternative zu Stellschrauben 160, 162, 164 sind hier auch andere Stellglieder denkbar, wie z.B. Exzenter, da es sich um kurze Stellwege handelt.

Figur 8 zeigt die Maschine 100 in der Position, in der die Stellitiervorrichtung 10 einen ausgewählten Sägezahn stellitieren kann. Um nun vom Stellitiervorgang zu dem Anlassvorgang wechseln zu können, wird der Plasmabrenner 16 entweder manuell über einen Positionierhebel 166 oder automatisch über einen Positionierantrieb 168 von dem Sägeblatt S weg bewegt und die Anlasseinrichtung 150 durch den Antrieb 158 in Richtung des anzulassenden Sägezahns bewegt.

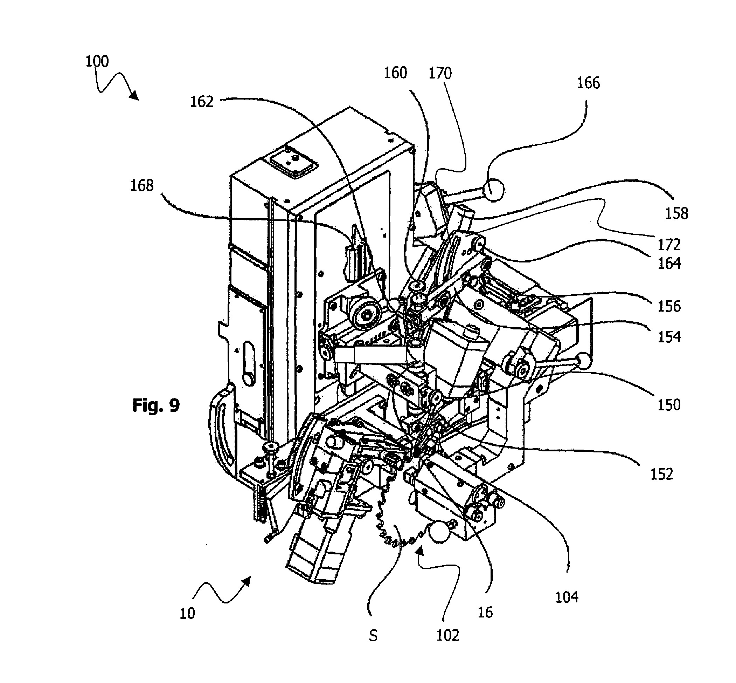

Figur 9 zeigt die Maschine 100 in der Position während des Anlassens. Wie man aus Figur 9 erkennt, wurde die Anlasseinrichtung 150 mit der Induktionsschlaufe 152 in Richtung des Sägeblatts S bzw. des zu bearbeitenden Sägezahns bewegt. Aus Figur 9 wird nun ersichtlich, dass die Hebelanordnung 154 zum Verlagern der Anlasseinrichtung 150 entlang einer Kurvennut 170 in der Halterung 172 um den Drehpunkt 156 verlagert werden kann. Dadurch wird eine annähernd geradlinige Bewegung der Induktionsschlaufe 152 in Richtung des Sägeblattes S erreicht.

Aus Figur 9 wird zudem ersichtlich, dass das Sägeblatt S in der gleichen Aufspanneinrichtung 102 verbleibt, wie beim Stellitieren. Mit anderen Worten können zum Stellitieren und Anlassen die gleiche Vorschubeinrichtung 104 und die gleiche Aufspanneinrichtung 102 verwendet werden. Es ist somit möglich mit der Maschine 100 in einem ersten Durchgang alle Sägezähne zu stellitieren und diese anschließend mit der Anlasseinrichtung 150 anzulassen. Dabei muss das Sägeblatt S nicht umgespannt und ausgerichtet werden, sondern kann in seiner Aufspanneinrichtung 102 verbleiben.

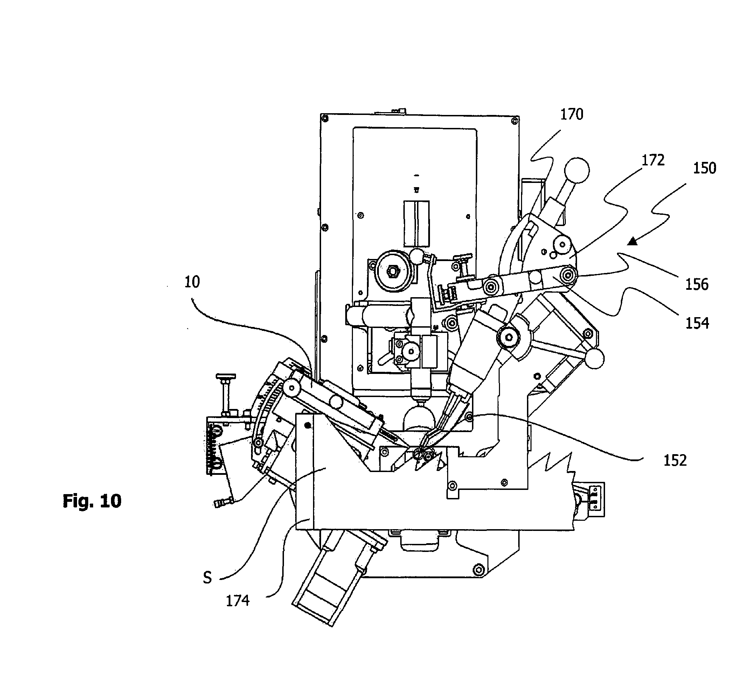

Figur 10 zeigt eine Vorderansicht der Maschine 100 mit der Stellitiereinrichtung 10 und der Anlasseinrichtung 150. Man erkennt ferner die Induktionsschlaufe 152 an der Anlassvorrichtung 150 und die um den Drehpunkt 156 verlagerbare Hebelanordnung 154. Der Hebelanordnung 154 kann entlang der Kurvennut 170 in der Halterung 172 bewegt werden.

Figur 10 stellt einen Spezialfall dar, da in diesem Fall ein Gattersägeblatt S stellitiert und angelassen werden soll. Das Gattersägeblatt S weist hierEinhangleisten 174 auf, mittels denen es bei einem Anwender in dessen Gatterrahmen eingehängt werden kann. Auch ein Gattersägeblatt S kann in der Aufspanneinrichtung 102 verbleiben und mit der Vorschubeinrichtung 104 positioniert werden.

## Patentansprüche

1. Drahtvorschubvorrichtung (12) zum Transportieren eines Schweißdrahtes (14) mit
- einem Motor (M) für das Hinaus- und Zurückfahren des Schweißdrahtes (14),
- einer vom 2 Motor (M) angetriebenen Rollenanordnung (30), durch die der Schweißdraht (14) hindurch geführt wird, wobei die Rollenanordnung (30) zumindest ein Rollenpaar (32, 34) aufweist, mittels denen der Schweißdraht (14) an einem vorbestimmten Abschmelzpunkt (AP) und an einer definierten Ausgangsposition positionierbar ist,
- einer Vorspanneinrichtung (42), die zumindest eine der Rollen (32a, 32b, 34a, 34b) des Rollenpaares (32, 34) in Richtung der anderen Rolle (32a, 32b, 34a, 34b) vorspannt, **dadurch gekennzeichnet, dass**
- die Drahtvorschubvorrichtung (12) eine Anschlaganordnung (46) aufweist, die der Vorspannung der zumindest einen vorgespannten Rolle (32a, 34a) entgegenwirkt und einen vorbestimmten Sollabstand zwischen den Rollen (32a, 32b, 34a, 34b) des zumindest einen Rollenpaares (32, 34) festlegt, wobei die Anschlaganordnung (46) an einer Rolle (32b) des zumindest einen Rollenpaares (32) vorgesehen ist, und sich zumindest die jeweils andere Rolle (32a) des einen Rollenpaares (32) an der Anschlaganordnung (46) derart abstützt, dass der Schweißdraht (14) über seine gesamte Länge in der Drahtvorschubvorrichtung (12) von dem vorbestimmten Abschmelzpunkt (AP) durch das eine Rollenpaar (32) hindurch in die definierte Ausgangsposition zurück verlagerbar ist.

2. Drahtvorschubvorrichtung (12) nach Anspruch 1,
**dadurch gekennzeichnet, dass** der von der Anschlaganordnung (46) festgelegte Sollabstand zwischen den Rollen (32a, 32b, 34a, 34b) des zumindest einen Rollenpaares (32, 34) auf verschiedene Drahtdurchmesser einstellbar ist.

3. Drahtvorschubvorrichtung (12) nach Anspruch 2,
**dadurch gekennzeichnet, dass** die Anschlaganordnung (46) eine Stellschraube aufweist, durch die der Sollabstand auf verschiedene Drahtdurchmesser einstellbar ist.

4. Drahtvorschubvorrichtung (12) nach Anspruch 2,
**dadurch gekennzeichnet, dass** die Anschlaganordnung (46) ein auswechselbarer Einzelanschlag ist, der einen vorbestimmten Sollabstand repräsentiert.

5. Drahtvorschubvorrichtung (12) nach Anspruch 2,
**dadurch gekennzeichnet, dass** die Anschlaganordnung (46) eine Scheibe mit sich stetig ändernden Radien ist, wobei jeder Radius einen anderen Sollabstand darstellt.

6. Drahtvorschubvorrichtung (12) nach Anspruch 2,
**dadurch gekennzeichnet, dass** die Anschlaganordnung (46) eine Scheibe mit Segmenten (46a, 46b, 46c, 46d) ist, wobei jedes Segment (46a, 46b, 46c, 46d) mit einem unterschiedlichen Radius ausgebildet ist und jeder Radius einen anderen Sollabstand darstellt.

7. Drahtvorschubvorrichtung (12) nach Anspruch 5 oder 6,
**dadurch gekennzeichnet, dass** der gewünschte Sollabstand zwischen den Rollen (32a, 32b, 34a, 34b) durch Verdrehen der Anschlaganordnung (46) einstellbar ist.

8. Drahtvorschubvorrichtung (12) nach einem der vorangehenden Ansprüche,
**dadurch gekennzeichnet, dass** an der Anschlaganordnung (46) eine Skalierung vorgesehen ist, die den jeweiligen eingestellten Sollabstand zwischen den Rollen (32a, 32b, 34a, 34b) anzeigt.

9. Drahtvorschubvorrichtung (12) nach einem der vorangehenden Ansprüche,
**dadurch gekennzeichnet, dass** die Vorspanneinrichtung (42) ein federnd gelagertes Ausgleichelement ist, an dem zumindest eine Rolle (32a, 32b, 34a, 34b) eines Rollenpaares (32, 34) angeordnet ist, wobei die Vorspanneinrichtung (42) die daran angeordnete Rolle (32a, 32b, 34a, 34b) in Richtung der anderen Rolle (32a, 32b, 34a, 34b) des Rollenpaares (32, 34) vorspannt.

10. Drahtvorschubvorrichtung (12) nach einem der vorangehenden Ansprüche,
**dadurch gekennzeichnet, dass** eine Vorspannkraft der Vorspanneinrichtung (42) einstellbar ist.

11. Drahtvorschubvorrichtung (12) nach einem der vorangehenden Ansprüche,
**dadurch gekennzeichnet, dass** die Rollenanordnung (30) zumindest zwei Rollenpaare (32, 34) aufweist, durch die der Schweißdraht (14) hindurch führbar ist.

12. Drahtvorschubvorrichtung (12) nach einem der vorangehenden Ansprüche,
**dadurch gekennzeichnet, dass** das die Rollenpaare (32, 34) antriebsmäßig untereinander gekoppelt sind.

13. Drahtvorschubvorrichtung (12) nach einem der vorangehenden Ansprüche, **dadurch gekennzeichnet, dass** an der Drahtvorschubvorrichtung (12) eine Richtrollenanordnung (22) vorgesehen ist.

14. Drahtvorschubvorrichtung (12) nach einem der vorangehenden Ansprüche,
**dadurch gekennzeichnet, dass** an der Drahtvorschubvorrichtung (12) eine Schweißdrahtzuführhülse (20) angeordnet ist.

15. Drahtvorschubvorrichtung (12) nach einem der vorangehenden Ansprüche,
**dadurch gekennzeichnet, dass** die Drahtvorschubeinrichtung (12) zum Transportieren des Schweißdrahts (14) durch die Schweißdrahtzuführhülse (20) in Richtung einer Formbackenanordnung (18) ausgelegt ist.

16. Vorrichtung (10) zum Stellitieren von Sägezähnen mit einer Drahtvorschubvorrichtung (12) nach einem der Ansprüche 1 bis 15.

17. Maschine (100) zum Bearbeiten von Sägeblättern mit einer Vorrichtung (10) nach Anspruch 16.

## Claims

1. Wire feed device (12) for transporting a welding wire (14) having
- a motor (M) for moving the welding wire (14) out and back,
- a roller arrangement (30) driven by the motor (M), through which arrangement the welding wire (14) is guided, the roller arrangement (30) having at least one roller pair (32, 34), by means of which the welding wire (14) is positionable at a predetermined melting-off point (AP) and at a defined starting position,
- a prestressing device (42) which prestresses at least one of the rollers (32a, 32b, 34a, 34b) of the roller pair (32, 34) in the direction of the other roller (32a, 32b, 34a, 34b), **characterised in that**
- the wire feed device (12) has a stop arrangement (46) which counteracts the prestressing of the at least one prestressed roller (32a, 34a) and fixes a predetermined desired distance between the rollers (32a, 32b, 34a, 34b) of the at least one roller pair (32, 34), the stop arrangement (46) being provided on a roller (32b) of the at least one roller pair (32), and at least the respective other roller (32a) of the one roller pair (32) being supported on the stop arrangement (46) in such a manner that the welding wire (14) is displaceable over its entire length in the wire feed device (12) from the predetermined melting-off point (AP) through the one roller pair (32) back into the defined starting position.

2. Wire feed device (12) according to Claim 1,
**characterised in that** the desired distance, fixed by the stop arrangement (46), between the rollers (32a, 32b, 34a, 34b) of the at least one roller pair (32, 34) is settable to different wire diameters.

3. Wire feed device (12) according to Claim 2,
**characterised in that** the stop arrangement (46) has a setting screw, by which the desired distance is settable to different wire diameters.

4. Wire feed device (12) according to Claim 2,
**characterised in that** the stop arrangement (46) is an exchangeable individual stop which represents a predetermined desired distance.

5. Wire feed device (12) according to Claim 2,
**characterised in that** the stop arrangement (46) is a disc with continuously changing radii, each radius representing a different desired distance.

6. Wire feed device (12) according to Claim 2,
**characterised in that** the stop arrangement (46) is a disc with segments (46a, 46b, 46c, 46d), each segment (46a, 46b, 46c, 46d) being formed with a different radius and each radius representing a different desired distance.

7. Wire feed device (12) according to Claim 5 or 6,
**characterised in that** the desired distance between the rollers (32a, 32b, 34a, 34b) is settable by rotating the stop arrangement (46).

8. Wire feed device (12) according to one of the preceding claims, **characterised in that** a scaling is provided on the stop device (46), which scaling indicates the respective set desired distance between the rollers (32a, 32b, 34a, 34b).

9. Wire feed device (12) according to one of the preceding claims, **characterised in that** the prestressing device (42) is a spring-mounted compensating element, on which at least one roller (32a, 32b, 34a, 34b) of a roller pair (32, 34) is arranged, the prestressing device (42) prestressing the roller (32a, 32b, 34a, 34b) arranged thereon in the direction of the other roller (32a, 32b, 34a, 34b) of the roller pair (32, 34).

10. Wire feed device (12) according to one of the preceding claims, **characterised in that** a prestressing force of the prestressing device (42) is settable.

11. Wire feed device (12) according to one of the preceding claims, **characterised in that** the roller arrangement (30) has at least two roller pairs (32, 34), through which the welding wire (14) is guidable.

12. Wire feed device (12) according to one of the preceding claims, **characterised in that** the roller pairs (32, 34) are drivingly coupled to one another.

13. Wire feed device (12) according to one of the preceding claims, **characterised in that** a directing roller arrangement (22) is provided on the wire feed device (12).

14. Wire feed device (12) according to one of the preceding claims, **characterised in that** a welding wire feeding sleeve (20) is arranged on the wire feed device (12).

15. Wire feed device (12) according to one of the preceding claims, **characterised in that** the wire feed device (12) is designed for transporting the welding wire (14) through the welding wire feeding sleeve (20) in the direction of a forming jaw arrangement (18).

16. Device (10) for stelliting saw teeth with a wire feed device (12) according to one of Claims 1 to 15.

17. Machine (100) for processing saw blades with a device (10) according to Claim 16.

## Revendications

1. Dispositif d'avance de fil (12) pour le transport d'un fil de soudure (14), comportant
- un moteur (M) pour la sortie et la rentrée du fil de soudure (14),
- un agencement de rouleaux (30) entraîné par le moteur (M), à travers lequel le fil de soudure (14) est guidé, l'agencement de rouleaux (30) comprenant au moins une paire de rouleaux (32, 34) au moyen de laquelle le fil de soudure (14) peut être positionné à un point de fusion prédéterminé (AP) et à une position initiale définie,
- un dispositif de précontrainte (42) qui précontraint au moins un des rouleaux (32a, 32b, 34a, 34b) de la paire de rouleaux (32, 34) en direction de l'autre rouleau (32a, 32b, 34a, 34b),
**caractérisé en ce que**
- le dispositif d'avance de fil (12) comprend un agencement de butée (46) qui s'oppose à la précontrainte dudit au moins un rouleau précontraint (32a, 34a) et définit une distance de consigne prédéterminée entre les rouleaux (32a, 32b, 34a, 34b) de ladite au moins une paire de rouleaux (32, 34), l'agencement de butée (46) étant prévu sur un rouleau (32b) de ladite au moins une paire de rouleaux et l'autre rouleau (32a) d'une paire de rouleaux (32) prenant appui sur l'agencement de butée (46) de telle façon que le fil de soudure (14) puisse être retransféré sur toute sa longueur dans le dispositif d'avance de fil (12) du point de fusion prédéterminé (AP) dans la position initiale définie à travers ladite une paire de rouleaux (32).

2. Dispositif d'avance de fil (12) selon la revendication 1,
**caractérisé en ce que** la distance de consigne entre les rouleaux (32a, 32b, 34a, 34b) de ladite au moins une paire de rouleaux (32, 34) définie par l'agencement de butée (46) peut être réglée sur différents diamètres de fil.

3. Dispositif d'avance de fil (12) selon la revendication 2,
**caractérisé en ce que** l'agencement de butée (46) présente une vis de réglage au moyen de laquelle la distance de consigne peut être réglée sur différents diamètres de fil.

4. Dispositif d'avance de fil (12) selon la revendication 2,
**caractérisé en ce que** l'agencement de butée (46) est une butée individuelle interchangeable qui représente une distance de consigne prédéterminée.

5. Dispositif d'avance de fil (12) selon la revendication 2,
**caractérisé en ce que** l'agencement de butée (46) est un disque ayant des rayons continuellement variables, chaque rayon représentant une autre distance de consigne.

6. Dispositif d'avance de fil (12) selon la revendication 2,
**caractérisé en ce que** l'agencement de butée (46) est un disque avec des segments (46a, 46b, 46c, 46d), chaque segment (46a, 46b, 46c, 46d) étant formé avec un rayon différent et chaque rayon représentant une autre distance de consigne.

7. Dispositif d'avance de fil (12) selon la revendication 5 ou 6,
**caractérisé en ce que** la distance de consigne souhaitée entre les rouleaux (32a, 32b, 34a, 34b) est réglable en tournant l'agencement de butée (46).

8. Dispositif d'avance de fil (12) selon l'une des revendications précédentes,
**caractérisé en ce qu'**une échelle est prévue sur l'agencement de butée (46), laquelle indique la distance de consigne réglée entre les rouleaux (32a, 32b, 34a, 34b).

9. Dispositif d'avance de fil (12) selon l'une des revendications précédentes,
**caractérisé en ce que** le dispositif de précontrainte (42) est un élément de compensation monté sur ressort sur lequel est disposé au moins un rouleau (32a, 32b, 34a, 34b) d'une paire de rouleaux (32, 34), le dispositif de précontrainte (42) précontraignant le rouleau (32a, 32b, 34a, 34b) disposé sur lui en direction de l'autre rouleau (32a, 32b, 34a, 34b) de la paire de rouleaux (32, 34).

10. Dispositif d'avance de fil (12) selon l'une des revendications précédentes,
**caractérisé en ce qu'**une force de précontrainte du dispositif de précontrainte (42) est réglable.

11. Dispositif d'avance de fil (12) selon l'une des revendications précédentes,
**caractérisé en ce que** l'agencement de rouleaux (30) présente au moins deux paires de rouleaux (32, 34) à travers lesquelles le fil de soudure (14) peut être guidé.

12. Dispositif d'avance de fil (12) selon l'une des revendications précédentes,
**caractérisé en ce que** les paires de rouleaux (32, 34) sont couplées entre elles en entraînement.

13. Dispositif d'avance de fil (12) selon l'une des revendications précédentes,
**caractérisé en ce qu'**un agencement de rouleaux dresseurs (22) est prévu sur le dispositif d'avance de fil (12).

14. Dispositif d'avance de fil (12) selon l'une des revendications précédentes,
**caractérisé en ce qu'**une douille d'amenée de fil de soudure (20) est disposée sur le dispositif d'avance de fil (12).

15. Dispositif d'avance de fil (12) selon l'une des revendications précédentes,
**caractérisé en ce que** le dispositif d'avance de fil (12) est conçu pour transporter le fil de soudure (14) à travers la douille d'amenée de fil de soudure (20) en direction d'un agencement de blocs de moule (18).

16. Dispositif (10) de stellitage de dents de scie muni d'un dispositif d'avance de fil (12) selon l'une des revendications 1 à 15.

17. Machine (100) pour l'usinage de lames de scie équipée d'un dispositif (10) selon la revendication 16.
